# EUROPEAN PATENT APPLICATION

(11) **EP 4 571 953 A1**
(43) Date of publication of application: **18.06.2025**
(21) Application number: 23852819.4
(22) Date of filing: 28.07.2023
(51) Int. Cl.: H01M 50/105, B29C 43/36, B29C 43/32

(54) **POUCH-TYPE BATTERY CASE AND FORMING DEVICE THEREFOR**

(30) Priority: 12.08.2022 KR 20220101639; 20.07.2023 KR 20230094872
(71) Applicant: LG Energy Solution, Ltd., Seoul 07335 (KR)
(72) Inventor: HONG, Jeong Woo, Daejeon 34122 (KR); KANG, Tae Won, Daejeon 34122 (KR); LEE, Chung Hee, Daejeon 34122 (KR); CHO, Sung Woo, Daejeon 34122 (KR)
(74) Representative: Goddar, Heinz J.
(86) International application number: PCT/KR2023/011004
(87) International publication number: WO 2024/034938

(57) **Abstract**

A pouch type battery case according to an embodiment of the present invention may include a pair of cases. At least one of the pair of cases may include: a cup part which is recessed; a terrace which is disposed on a circumference of the cup part and on which a sealing part is provided; and a protrusion protruding from the terrace in a direction opposite to a depth direction of the cup part. At least a portion of the sealing part may be provided on the protrusion.

## Description

### TECHNICAL FIELD

### CROSS-REFERENCE TO RELATED APPLICATION

The present application claims the benefit of the priority of Korean Patent Application Nos. 10-2022-0101639, filed on August 12, 2022, and 10-2023-0094872, filed on July 20, 2023, which are hereby incorporated by reference in their entirety.

### TECHNICAL FIELD

The present invention relates to a pouch type battery case and a forming apparatus for manufacturing the same.

### BACKGROUND ART

In general, types of secondary batteries include nickel-cadmium batteries, nickel-hydrogen batteries, lithium-ion batteries, lithium-ion polymer batteries, and the like. These secondary batteries are applied to and used in not only small-sized products such as digital camera, P-DVD, MP3P, mobile phone, PDA, portable game device, power tool, and E-bike, but also large-sized products such as electric vehicle or hybrid vehicle, which require high output, energy storage systems for storing surplus electricity or new renewable energy, and energy storage systems for backup.

In order to manufacture these secondary batteries, a positive electrode current collector and a negative electrode current collector are coated with electrode active material slurry to make a positive electrode and a negative electrode, and then the positive electrode and the negative electrode are stacked at both sides of a separator to form an electrode assembly having a predetermined shape. Thereafter, a battery case accommodates the electrode assembly and is sealed after injection of an electrolyte.

According to the material of the case that accommodates the electrode assembly, the secondary batteries are classified into a pouch type, a can type, and the like. In the pouch type, the electrode assembly is accommodated in a pouch made of a flexible polymer material. In the can type, the electrode assembly is accommodated in a case made of a material such as metal or plastic.

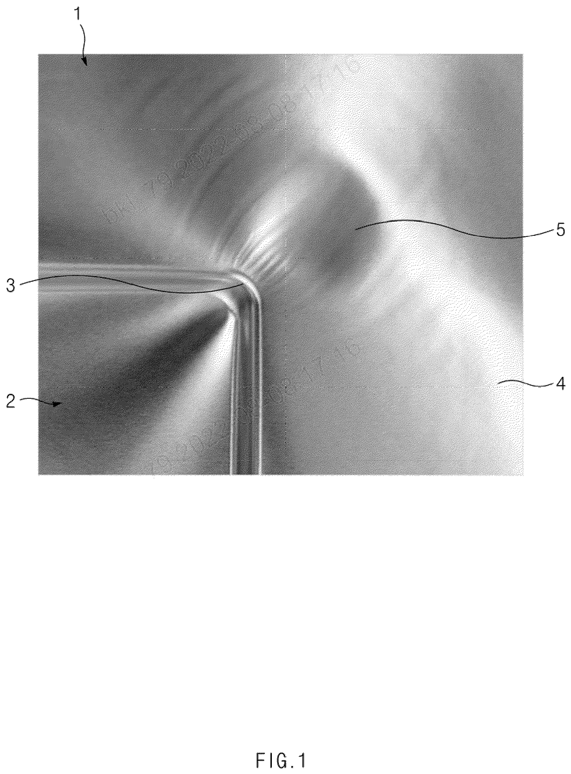

Referring to FIG. 1, a pouch type battery case 1 is generally manufactured by performing press working on a pouch sheet having flexibility to form a cup part 2. When the cup part 2 is formed, the electrode assembly is accommodated inside the cup part 2, and a terrace 4 is sealed to manufacture a secondary battery. Drawing molding of this press working is performed by inserting the pouch sheet into a forming apparatus such as press equipment, and applying a pressure to the pouch sheet by using a punch to stretch the pouch sheet.

A wave 5 may be generated around the cup part 3 of the pouch sheet during the molding operation of the cup part 3. In particular, this wave 5 may be prominent near a corner 3 of the cup part 2. Accordingly, there is a concern that a sealing defect of the pouch type battery case 1 may occur due to the wave 5.

### DISCLOSURE OF THE INVENTION

### TECHNICAL PROBLEM

An object of the present invention for solving the above problems is to provide a pouch type battery case, of which sealing quality is improved due to a protrusion provided on a circumference of a cup part, and a forming apparatus for manufacturing the pouch type battery case.

### TECHNICAL SOLUTION

A pouch type battery case according to an embodiment of the present invention may include a pair of cases. At least one of the pair of cases may include: a cup part which is recessed; a terrace which is disposed on a circumference of the cup part and on which a sealing part is provided; and a protrusion protruding from the terrace in a direction opposite to a depth direction of the cup part. At least a portion of the sealing part may be provided on the protrusion.

Each of the pair of cases may include the cup part, the terrace, and the protrusion. The protrusion of one of the pair of cases and the protrusion of the other may be in contact with each other to be sealed.

The protrusion may extend along the sealing part.

At least a portion of the protrusion may be disposed outside a corner of the cup part.

A width of the protrusion may be greater than a width of the sealing part.

Edges at both sides in a width direction of the sealing part may be disposed inward from edges at both sides in a width direction of the protrusion, respectively.

The protrusion may include: a first portion disposed outside the cup part in a width direction of the cup part; and a second portion connected to the first portion and disposed outside the cup part in a length direction of the cup part.

The first portion may extend to be parallel to a length of the cup part, and the second portion may extend to be parallel to a width of the cup part.

A forming apparatus according to an embodiment of the present invention may include: a die in which a molding recess is defined; a punch disposed to face the molding recess; a stripper disposed on a circumference of the punch to face the die; a sub-molding recess defined in the stripper; a sub-punch protruding from the die to face the sub-molding recess; a pressing part disposed in the sub-molding recess; and an elastic member that applies elastic force directed to the sub-punch to the pressing part.

The sub-punch may be disposed outside the molding recess.

At least a portion of the sub-punch may be disposed outside a corner of the molding recess.

The sub-punch may include: a first punch part disposed outside the molding recess in a width direction of the molding recess; and a second punch part connected to the first punch part and disposed outside the molding recess in a length direction of the molding recess.

The first punch part may extend to be parallel to a length of the molding recess, and the second punch part may extend to be parallel to a width of the cup part.

The sub-punch may further include: a third punch part disposed outward from the first punch part and spaced a predetermined gap from the first punch part; and a fourth punch part that connects the third punch part to the first punch part.

The third punch part may extend to be parallel to the first punch part, and the fourth punch part may extend to be parallel to the second punch part.

A mounting groove in which the sub-punch is mounted may be defined in the die.

### ADVANTAGEOUS EFFECTS

According to the preferred embodiments of the present invention, due to the protrusion, the wave may be prevented from being generated in the pouch sheet, around the cup part.

In addition, the protrusion protruding in the direction opposite to the cup part may be sealed to improve the sealing reliability of the battery case and minimize the concern that the electrolyte may leak, when compared to the battery case according to the related art in which the wave is generated around the cup part, in the terrace.

The effects of the present invention are not limited to the contents described above, and the more various effects are included in the present disclosure.

### BRIEF DESCRIPTION OF THE DRAWINGS

FIG. 1 is an enlarged view illustrating surroundings of a corner of a cup part of a pouch type battery case according to the related art.
FIG. 2 is a schematic cross-sectional view of a forming apparatus according to a first embodiment of the present invention.
FIG. 3 is a plan view of a die included in the forming apparatus according to the first embodiment of the present invention.
FIG. 4 is a schematic view of a pouch type battery case molded by the forming apparatus according to the first embodiment of the present invention.
FIG. 5 is a cross-sectional view taken along a line A-A' in FIG. 4.
FIG. 6 is a side view illustrating a state in which the pouch type battery case illustrated in FIG. 4 is sealed.
FIG. 7 is a modified example of the pouch type battery case illustrated in FIG. 4.
FIG. 8 is a side view illustrating a state in which the pouch type battery case illustrated in FIG. 7 is folded.
FIG. 9 is a plan view of a die included in a forming apparatus according to a second embodiment of the present invention.
FIG. 10 is a schematic view of a pouch type battery case molded by the forming apparatus according to the second embodiment of the present invention.
FIG. 11 is a plan view illustrating a state in which the pouch type battery case illustrated in FIG. 10 is sealed.
FIG. 12 is a plan view of a die included in a forming apparatus according to a third embodiment of the present invention.
FIG. 13 is a schematic view of a pouch type battery case molded by the forming apparatus according to the third embodiment of the present invention.
FIG. 14 is a plan view illustrating a state in which the pouch type battery case illustrated in FIG. 13 is sealed.

### MODE FOR CARRYING OUT THE INVENTION

Hereinafter, preferred embodiments of the present invention will be described in detail with reference to the accompanying drawings to enable those of ordinary skill in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

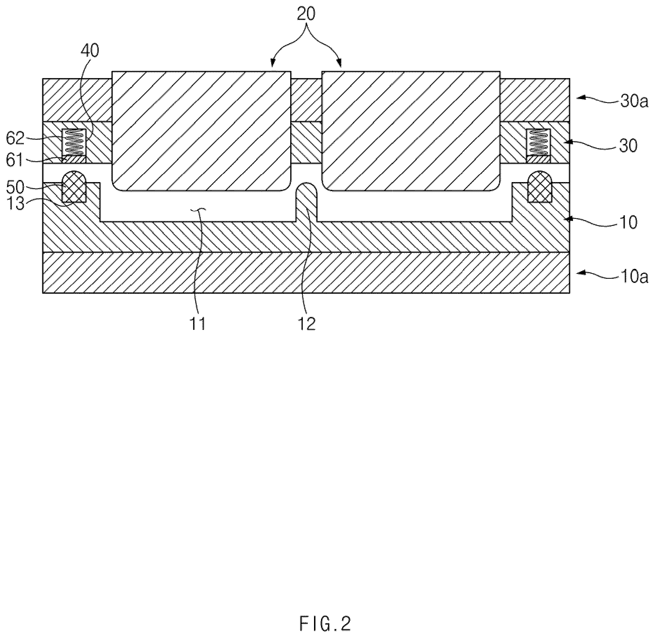

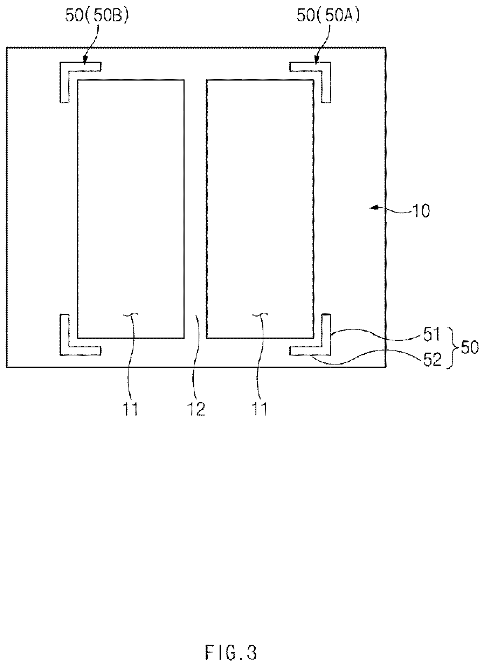

FIG. 2 is a schematic cross-sectional view of a forming apparatus according to a first embodiment of the present invention. FIG. 3 is a plan view of a die included in the forming apparatus according to the first embodiment of the present invention.

The forming apparatus according to the first embodiment of the present invention may mold a pouch sheet (not shown) to manufacture a pouch type battery case 100 (see FIG. 3). The pouch sheet may be a sheet-shaped member in which a plurality of layers are laminated. For example, the pouch sheet may include a first resin layer (e.g., polypropylene material) constituting one surface, a second resin layer (e.g., polyethylene terephthalate material) constituting the other surface, and a metal layer (e.g., aluminum material) disposed between the first resin layer and the second resin layer. The pouch sheet may have flexibility and moldability. The pouch sheet may be termed a pouch film.

The forming apparatus may include a die 10 in which a molding recess 11 is defined, a punch 20 disposed to face the molding recess 11, a stripper 30 disposed on a circumference of the punch 20 to face the die 10, a sub-molding recess 40 defined in the stripper 30, and a sub-punch 50 protruding from the die 10 to face the sub-molding recess 40.

The die 10 may have an approximately horizontal plate shape. When the pouch sheet is disposed between the die 10 and the stripper 30, a top surface of the die 10 may face a bottom surface of the pouch sheet.

The die 10 may be coupled onto a die back plate 10a.

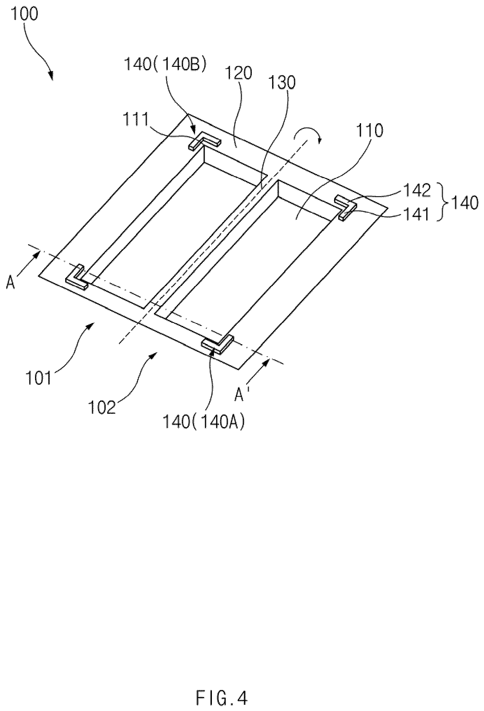

At least one molding recess 11 recessed downward from the top surface of the die 10 may be defined in the die 10. The molding recess 11 may be penetrated to the bottom surface of the die 10, but is not limited thereto. The punch 20 to be described later may be inserted into the molding recess 11 and press the pouch sheet so that a cup part 110 (see FIG. 4) is molded in the pouch sheet.

A pair of molding recesses 11 partitioned from each other may be defined in the die 10 according to this embodiment. The pair of molding recesses 11 may be provided to be adjacent to each other, and the die 10 may be provided with a partition wall 12 disposed between the pair of molding recesses 11. When drawing molding is performed on the pouch sheet by inserting the punch 20 to be described later into each of the pair of molding recesses at the same time, a pair of cup parts 110 may be provided to correspond to the pair of molding recesses 11, and a bridge 130 corresponding to the partition wall 12 of the die 10 may be provided between this pair of cup parts 110.

The stripper 30 may have an approximately horizontal plate shape. When the pouch sheet is disposed between the die 10 and the stripper 30, a bottom surface of the stripper 30 may face a top surface of the pouch sheet. The stripper 30 together with the die 10 may fix the pouch sheet.

An opened portion, which is vertically penetrated and in which the punch 20 is disposed, may be defined in the stripper 30. That is, the stripper 30 may surround the punch 20.

The stripper 30 may be coupled to a lower side of a stripper back plate 30a. A sub-opened portion corresponding to the opened portion of the stripper 30 may be defined in the stripper back plate 30a. Thus, the punch 20 may protrude upward from the stripper back plate 30a.

At least one of the stripper 30 or the die 10 may be elevatably configured so that a distance between the stripper 30 and the die 10 varies. In a state in which the stripper 30 and the die 10 are spaced apart from each other, the pouch sheet may be introduced between the stripper 30 and the die 10. In a state in which the pouch sheet is disposed between the stripper 30 and the die 10, the stripper 30 may descend toward the die 10, or the die 10 may ascend toward the stripper 30. Accordingly, the pouch sheet may be fixed between the top surface of the die 10 and the bottom surface of the stripper 30.

The punch 20 may be disposed in the opened portion of the stripper 30. When the pouch sheet is disposed between the die 10 and the stripper 30, the punch 20 may face the molding recess 11 defined in the die 10 with the pouch sheet therebetween. When the pair of molding recesses 11 are defined in the die 10, the punch 20 may also be provided in a pair to correspond to the pair of molding recesses 11. The pair of punches 20 may be connected to each other, or separated from each other.

When the die 10 and the stripper 30 ascend with respect to the punch 20 in a state of fixing the pouch sheet, the punch 20 may be inserted into the molding recess 11 of the die 10 while pressing the pouch sheet. Alternatively, when the punch 20 descends with respect to the die 10 and the stripper 30 in a state in which the die 10 and the stripper 30 fix the pouch sheet, the punch 20 may be inserted into the molding recess 11 of the die 10 while pressing the pouch sheet.

Accordingly, a portion, which is pressed by the punch 20, of the pouch sheet and a portion therearound may be stretched, and the cup part 110 (see FIG. 4) may be molded.

The sub-molding recess 40 may be molded in the stripper 30. In more detail, the sub-molding recess 40 may be recessed upward from the bottom surface of the stripper 30. The sub-molding recess 40 may be provided to have a predetermined depth, or to pass through the stripper 30.

The sub-molding recess 40 may be disposed outward from the punch 20. That is, the sub-molding recess 40 may be disposed outward from the opened portion defined in the stripper 30. The sub-punch 50 to be described later may be inserted into the sub-molding recess 40 and press the pouch sheet so that a protrusion 140 (see FIG. 4) is provided on the pouch sheet.

The sub-punch 50 may protrude upward from the die 10. The sub-punch 50 may face the sub-molding recess 40 defined in the stripper 30.

The sub-punch 50 may be mounted in the die 10. For example, a mounting groove 13 in which the sub-punch 50 is mounted may be defined in the die 10. However, an embodiment of the present invention is not limited thereto, and the sub-punch 50 and the die 10 may be provided as one body.

The sub-punch 50 may be disposed outward from the molding recess 11.

Referring to FIG. 3, the sub-punch 50 of the forming apparatus according to this embodiment may be disposed outside a corner of the molding recess 11. Each of the molding recesses 11 may have an approximately rectangle shape, and a portion corresponding to an apex of the rectangle shape may be termed the corner of the molding recess 11. Those of ordinary skill in the art could also easily understand that the corner of the molding recess 11 is provided to be rounded.

The sub-punch 50 may be provided in plurality. As illustrated in FIG. 3, a plurality of sub-punches 50 may include a first sub-punch 50A disposed outside a corner of one molding recess 11, and a second sub-punch 50 B disposed outside a corner of the other molding recess 11.

Likewise, the sub-molding recess 40 may also be provided in plurality. The first sub-punch 50A may be inserted into one of the plurality of sub-molding recesses 40, and the second sub-punch 50 B may be inserted into the other.

The plurality of sub-punches 50 may be disposed at a side opposite to the partition wall 12 of the die 10. In more detail, a pair of inner corners of four corners of each of the molding recess 11 may be defined by the partition wall 12, and a pair of outer corners may be disposed at the side opposite to the partition wall 12. Each of the sub-punches 50 may be disposed outside the outer corner of the molding recess 11. In more detail, the first sub-punch 50A may be disposed outside an outer corner of one molding recess 11, and the second sub-punch 50 B may be disposed outside an outer corner of the other molding recess 11. That is, each of the first sub-punch 50A and the second sub-punch 50 B may be provided in a pair.

Each of the sub-punches 50 may have a shape surrounding the corner of the molding recess 11. In more detail, each of the sub-punches 50 may include a first punch part 51 and a second punch part 52.

The first punch part 51 may be disposed outward from the molding recess 11 in a width direction of the molding recess 11. The first punch part 51 may extend to be parallel to a length of the molding recess 11.

The second punch part 52 may be disposed outward from the molding recess 11 in a length direction of the molding recess 11. The second punch part 52 may extend to be parallel to a width of the molding recess 11.

The first punch part 51 and the second punch part 52 may be connected to each other.

A distance between the molding recess 11 and the sub-punch 50 may be approximately constant on the top surface of the die 10. In more detail, a distance between the first punch part 51 and the molding recess 11 in the width direction of the molding recess 11 may correspond to a distance between the second punch part 52 and the molding recess 11 in the length direction of the molding recess 11. However, an embodiment of the present invention is not limited thereto.

The sub-molding recess 40 may have a shape corresponding to the shape of the sub-punch 50. When the sub-punch 50 is inserted into the sub-molding recess 40, a predetermined gap may be defined between an inner circumference of the sub-molding recess 40 and an outer circumference of the sub-punch 50 so that the pouch sheet is easily stretched.

Accordingly, a portion, which is pressed by the sub-punch 50 inserted into the sub-molding recess 40, of the pouch sheet and a portion therearound may be stretched, and the protrusion 140 (see FIG. 4) may be molded. Due to the protrusion 140, the wave may be prevented from be generated in the pouch sheet around the corner of the cup part 110.

The forming apparatus may further include a pressing part 61 disposed inside the sub-molding recess 40, and an elastic member 62 that applies elastic force to the pressing part 61.

The pressing part 61 may have a shape corresponding to the sub-molding recess 40 and the sub-punch 50. The pressing part 61 may be slidably disposed in the sub-molding recess 40.

The elastic member 62 may be disposed inside the sub-molding recess 40. The elastic member 62 may apply the elastic force to the pressing part 61 toward the sub-punch 50. For example, the elastic member 62 may be a spring.

Thus, the pressing part 61 may apply, through the sub-punch 50, a predetermined surface pressure to the pouch sheet stretched into the sub-insertion recess 40. Accordingly, a uniform surface pressure may be applied to the pouch sheet stretched into the sub-insertion recess 40, and the wave may be prevented from being generated in the pouch sheet.

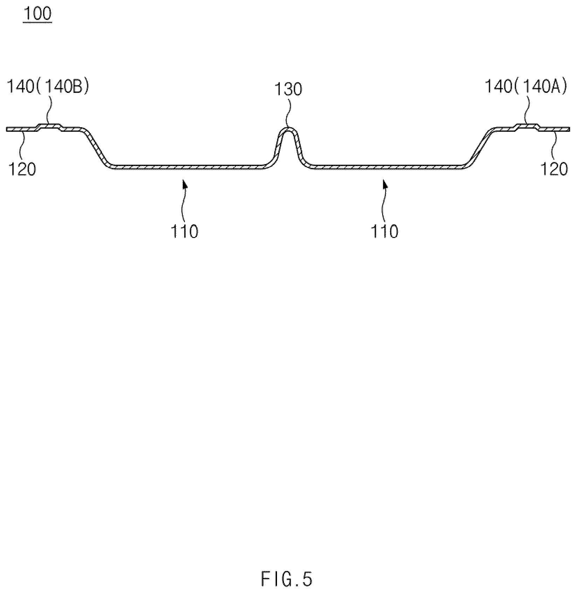

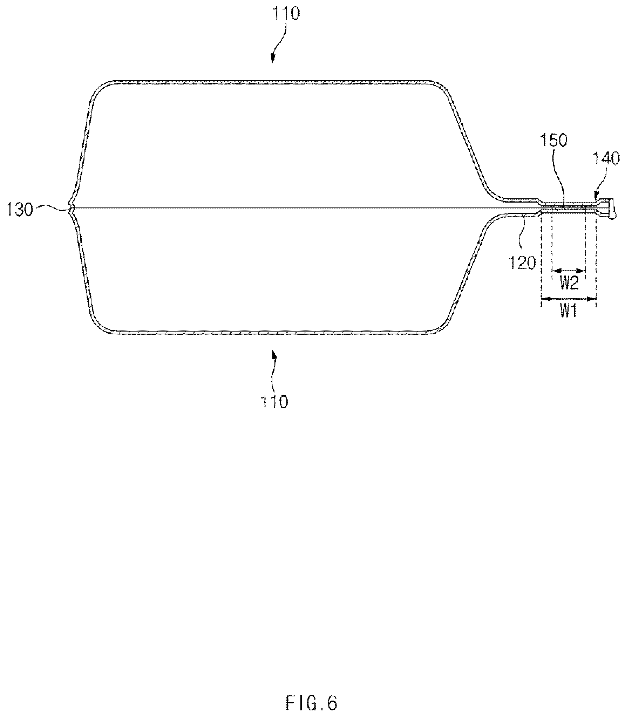

FIG. 4 is a schematic view of a pouch type battery case molded by the forming apparatus according to the first embodiment of the present invention. FIG. 5 is a cross-sectional view taken along a line A-A' in FIG. 4. FIG. 6 is a side view illustrating a state in which the pouch type battery case illustrated in FIG. 4 is sealed.

Hereinafter, a pouch type battery case 100 manufactured by the forming apparatus according to the first embodiment will be described as an embodiment of the present invention.

The pouch type battery case 100 (hereinafter referred to as the "battery case") may accommodate an electrode assembly (not shown) therein, and may be provided by molding a pouch sheet. In more detail, when the forming apparatus according to an embodiment of the present invention performs drawing molding on the pouch sheet, a portion of the pouch sheet may be stretched to provide a cup part 110 and a protrusion 140 so that the battery case 100 is manufactured.

The battery case 100 may include the cup part 110 that is recessed, a terrace 120 that is disposed on a circumference of the cup part 110, and the protrusion 140 that protrudes from the terrace 120 in a direction opposite to a depth direction of the cup part 110 and is disposed outside the cup part 110.

In more detail, the battery case 100 may include a pair of cases 101 and 102, and in more detail, a first case 101 and a second case 102, and at least one of the first case 101 or the second case 102 may include the cup part 110, the terrace 120, and the protrusion 140.

Hereinafter, as illustrated in FIG. 4, a case in which one side of the first case 101 and one side of the second case 102 are connected to each other will be described as an example. However, an embodiment of the present invention is not limited thereto, and the first case 101 and the second case 102 may also be separated from each other and manufactured separately.

In this embodiment, each of the first case 101 and the second case 102 may include the cup part 110, the terrace 120, and the protrusion 140.

That is, the battery case 100 may include a pair of cup parts 110. The battery case 100 may further include a bridge 130 disposed between the pair of cup parts 110.

The cup part 110 may be recessed from the terrace 120 by a predetermined depth to define a space in which the electrode assembly (not shown) is accommodated. The electrode assembly may be accommodated in one of the cup parts 110, and then the bridge 130 may be folded so that the pair of cup parts 110 face each other. Then, the other cup part 110 may cover the electrode assembly from an upper side. Accordingly, the electrode assembly may be accommodated inside the pair of cup parts 110.

Each of the cup parts 110 may have an approximately rectangle shape. A portion at which a long side and a short side of each of the cup parts 110 meet each other may be termed a corner 111 of the cup part 110. Those of ordinary skill in the art could also easily understand that the corner 111 of the cup part 110 is provided to be rounded.

The terrace 120 of the first case 101 and the terrace 120 of the second case 102 may be connected to each other at both sides of the bridge 130. When the bridge 130 is folded, the terrace 120 may be folded together. In more detail, a portion at which the terrace 120 of the first case 101 and the terrace 120 of the second case 102 are connected to each other may be folded together with the bridge 130.

The protrusion 140 may protrude from the terrace 120 in a direction opposite to the cup part 110. For example, the cup part 110 may be recessed downward, and the protrusion 140 may protrude upward.

The protrusion 140 may be provided outward from the cup part 110. At least a portion of the protrusion 140 may be disposed outside the corner of the cup part 110.

In this embodiment, the protrusion 140 may be provided on the terrace 120 and outside the corner of the cup part 110.

The protrusion 140 may be provided in plurality. A plurality of protrusions 140 may include a first protrusion 140A disposed outside a corner of one cup part 110, and a second protrusion 140B disposed outside a corner of the other cup part 110. That is, one of the first protrusion 140A and the second protrusion 140B may be included by the first case 101, and the other may be included by the second case 102.

Each of the protrusions 140 may have a shape surrounding the corner of the cup part 110. In more detail, each of the protrusions 140 may include a first portion 141 and a second portion 142.

The first portion 141 may be disposed outward from the cup part 110 in a width direction of the cup part 110. The first portion 141 may extend to be parallel to a length of the cup part 110.

The second portion 142 may be disposed outward from the cup part 110 in a length direction of the cup part 110. The second portion 142 may extend to be parallel to a width of the cup part 110.

The first portion 141 and the second portion 142 may be connected to each other.

A distance between the cup part 110 and the protrusion 140 may be approximately constant on the terrace 120. In more detail, a distance between the first portion 141 and the cup part 110 in the width direction of the cup part 110 may correspond to a distance between the second portion 142 and the cup part 110 in the length direction of the cup part 110. However, an embodiment of the present invention is not limited thereto.

The plurality of protrusions 140 may be disposed at a side opposite to the bridge 130. In more detail, a pair of inner corners of four corners of each of the cup parts 110 may be defined by the bridge 130, and a pair of outer corners may be disposed at the side opposite to the bridge 130. Each of the protrusions 140 may be disposed outside the outer corner of the cup part 110. In more detail, the first protrusion 140A may be disposed outside an outer corner of one cup part 110, and the second protrusion 140B may be disposed outside an outer corner of the other cup part 110. That is, each of the first protrusion 140A and the second protrusion 140B may be provided in a pair.

Although not illustrated in the drawings, a pair of first protrusions 140A may be provided to be connected to each other. In more detail, the respective first portions 141 of the pair of first protrusions 140A may be elongated so as to be connected to each other.

In the protrusion 140 and the cup part 110, the pouch sheet may be stretched in opposite directions, and thus a wave may be prevented from being generated in the terrace 120, around the corner of the cup part 110.

When the bridge 130 is folded, the terrace 120 of the first case 101 and the terrace 120 of the second case 102 may face each other, and may be sealed to each other. An area on which the terrace 120 of the first case 101 and the terrace 120 of the second case 102 are sealed to each other may be defined as a sealing part 150. This sealing part 150 may extend along the circumference of the cup part 110. When the first case 101 and the second case 102 are connected through the bridge 130 like this embodiment, the sealing part 150 may be provided along three sides of the battery case 10. In contrast, when the first case 101 and the second case 102 are separated from each other, the sealing part 150 may be provided along four sides of the battery case 100.

At least a portion of the sealing part 150 may be provided on the protrusion 140.

That is, the protrusion 140 may be sealed. When each of the pair of cases 101 and 102 includes the protrusion 140 like this embodiment, the protrusion 140A of one of the pair of cases 101 and 102 and the protrusion 140B of the other may be in contact with each other to be sealed. That is, the protrusion 140A and the protrusion 140B may be in contact with each other to be sealed. In more detail, the sealing part 150 of the battery case 100 may be provided so as to pass a portion at which the protrusion 140A and the protrusion 140B are in contact with each other.

A width W1 of the protrusion 140 may be greater than a width W2 of the sealing part 150. In more detail, edges at both sides in a width direction of the sealing part 150 may be disposed inward from edges at both sides in a width direction of the protrusion 140, respectively. That is, a sealing tool for sealing the battery case 100 may press and seal the inside of the protrusion 140 without pressing both the sides in the width direction of the protrusion 140. Accordingly, high sealing quality may be maintained.

The sealing tool (not shown) for sealing the battery case 100 may provide the sealing part 150 by pressing the protrusion 140 together with a portion, on which the protrusion 140 is not provided, of the terrace 120 (in this embodiment, a portion excluding the surroundings of the corner of the cup part from the circumference of the cup part). The protrusion 140 may protrude from the terrace 120 to have a height that does not interfere in providing the sealing part 150. Thus, when the first protrusion 140A and the second protrusion 140B are in contact with each other, the terrace 120 of the first case 101 and the terrace 120 of the second case 102 may also be in contact with or adjacent to each other, and the sealing part 150 may be easily provided.

As the protrusion 140 is sealed as above, the sealing reliability of the battery case 100 may be improved, and the concern that the electrolyte may leak may be minimized, when compared to the battery case according to the related art in which a wave is generated around the cup part, in the terrace.

In particular, when the protrusion 140 is provided only around the corner 111 of the cup part 110 like this embodiment, there is an advantage that an amount of stretch of the pouch sheet stretched into the molding recess 11 of the die 10 during the molding of the cup part 110 may be made uniform. In addition, since a wave is concentrated around the corner of the cup part 110 when the protrusion 140 is not present on the terrace 120, this wave may be effectively removed.

Moreover, as the bridge 130 is folded, it is unnecessary to seal the bridge 130 separately. When the protrusion 140 is provided on a side of the inner corner 111 of the cup part 110, which is adjacent to the bridge 130, the thickness of the bridge 130 may increase, and thus there is a concern that the battery case 100 may be reduced in energy density and quality of an outer appearance. That is, as the plurality of protrusions 140 are disposed at a side opposite to the bridge 130, the energy density and the outer appearance quality of the battery case 100 may be maintained to be high, and also the sealing reliability may be improved.

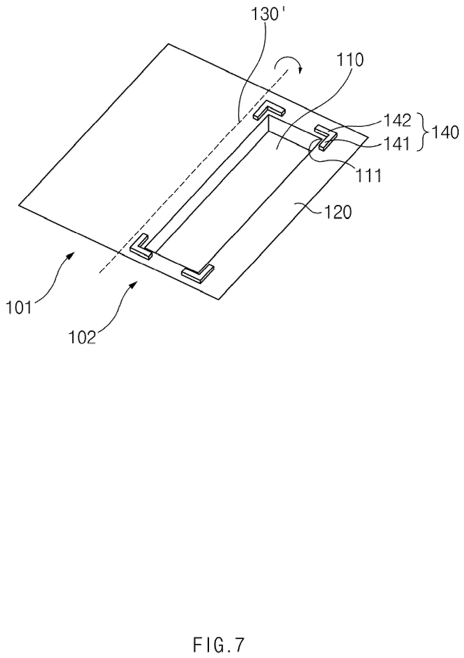

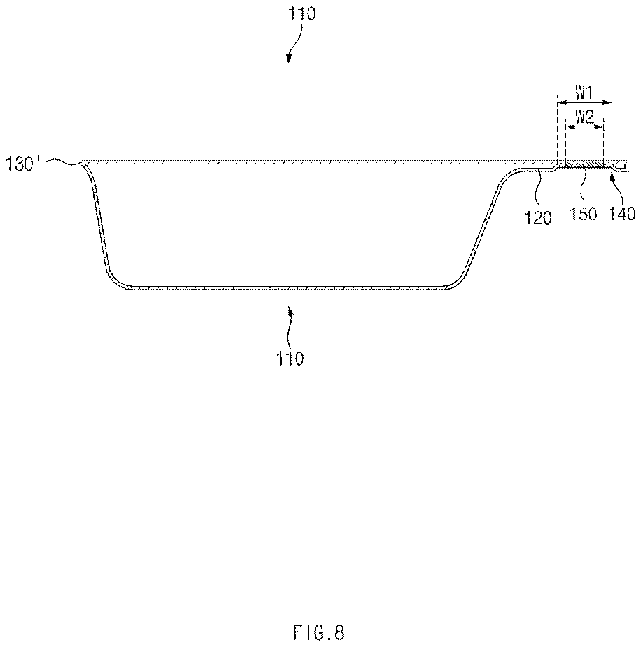

FIG. 7 is a modified example of the pouch type battery case illustrated in FIG. 4. FIG. 8 is a side view illustrating a state in which the pouch type battery case illustrated in FIG. 7 is folded.

Hereinafter, the content in common with the content described above will be omitted, and the description will be focused on differences.

In the pouch type battery case, only one of a first case 101 and a second case 102 may include a cup part 110, a terrace 120, and a protrusion 140. That is, a battery case 100 may include a single cup part 110.

A plurality of protrusions 140 may be provided on four corners 111 of the cup part 110, respectively. That is, the first case 101 or the second case 102 may include four protrusions 140. Although not illustrated in the drawings, at least some of the four protrusions 140 may be provided to be connected to each other. In more detail, respective first portions 141 and/or second portions 142 of the at least some of the four protrusions 140 may be elongated so as to be connected to each other.

When the first case 101 and the second case 102 are connected to each other, the first case 101 and the second case 102 may be partitioned by a folding line 130'. Hereinafter, a case in which the second case 102 includes the cup part 110, the terrace 120, and the protrusion 140 will be described as an example.

An electrode assembly (not shown) may be accommodated in the cup part 110 provided in the second case 102, and then the folding line 130' may be folded so that the first case 101 covers the cup part 110.

When the folding line 130' is folded, the terrace 120 of the second case 102 and the first case 101 may face each other, and may be sealed to each other. An area on which the terrace 120 of the second case 102 and the first case 101 are sealed to each other may be defined as a sealing part 150.

The protrusion 140 of the second case 102 may be in contact with the first case 101 to be sealed. In more detail, the sealing part 150 may be provided so as to pass a portion at which the protrusion 140 of the second case 102 and the first case 101 are in contact with each other.

As the folding line 130' is folded, it is unnecessary to seal the folding line 130' separately. Thus, an embodiment in which the protrusions 140 are provided at a side opposite to the folding line 130' may also be provided in order that the folding line 130' is disposed as adjacent to the cup part 110 as possible.

That is, unlike that illustrated in FIG. 7, the first case 101 or the second case 102 may include a pair of protrusions 140 disposed at sides of outer corners of the cup part 110, respectively, and may not include a pair of protrusions disposed at sides of inner corners of the cup part 110, respectively.

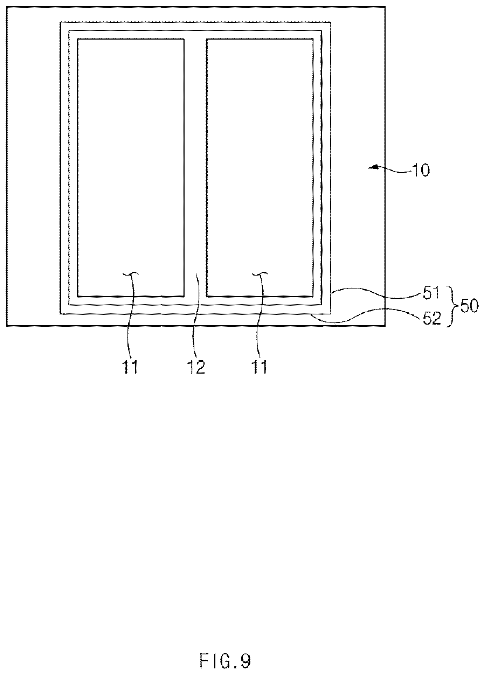

FIG. 9 is a plan view of a die included in a forming apparatus according to a second embodiment of the present invention.

A sub-punch 50 protruding from a die 10 of the forming apparatus according to this embodiment may be disposed outside a molding recess 11. In more detail, the sub-punch 50 may extend along a circumference of the molding recess 11.

At least a portion of the sub-punch 50 may be disposed outside a corner of the molding recess 11.

The sub-punch 50 may include a first punch part 51 extending to be parallel to a length of the molding recess 11, and a second punch part 52 extending to be parallel to a width of the molding recess 11.

The sub-punch 50 may form a single closed loop surrounding a pair of molding recesses 11. In more detail, the first punch part 51 and the second punch part 52 may form a single closed loop.

When a single molding recess 11 is provided in the die 10, the sub-punch 50 may form a single closed loop surrounding the single molding recess 11.

However, an embodiment of the present invention is not limited thereto, and the sub-punch 50 may also be provided so that the sub-punch 50 extends along the closed loop, and some sections are disconnected.

Those of ordinary skill in the art could also easily understand that a sub-molding recess 40 corresponding to the sub-punch 50 is defined in a stripper 30 of the forming apparatus according to this embodiment.

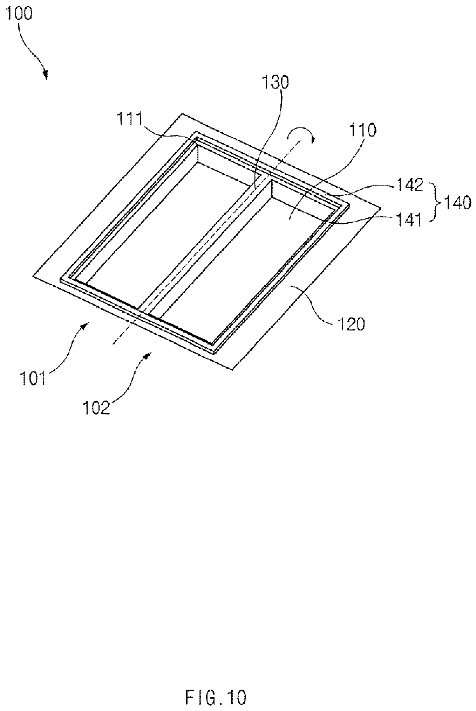

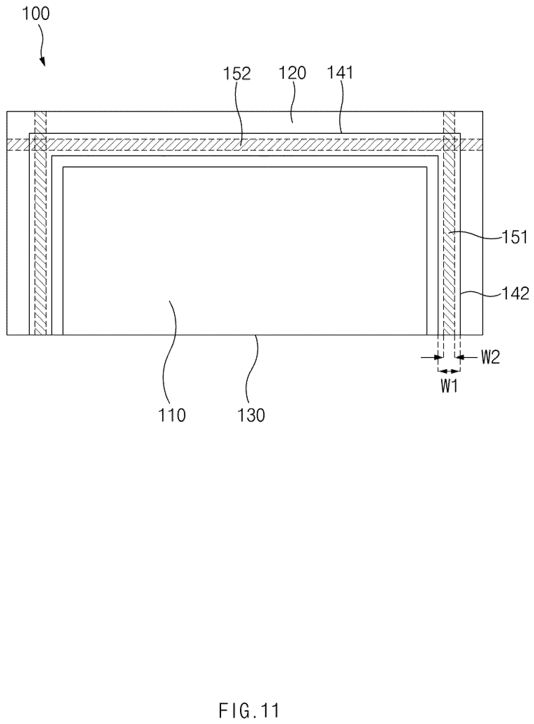

FIG. 10 is a schematic view of a pouch type battery case molded by the forming apparatus according to the second embodiment of the present invention. FIG. 11 is a plan view illustrating a state in which the pouch type battery case illustrated in FIG. 10 is sealed.

Hereinafter, a pouch type battery case 100 manufactured by the forming apparatus according to the second embodiment will be described as an embodiment of the present invention by applying the content in common with the content described above, and focusing on differences.

A protrusion 140 may be molded by the sub-punch 50 of the die 10. The protrusion 140 may have a shape corresponding to the sub-punch 50 of the die 10.

The protrusion 140 may be provided outward from a cup part 110. The protrusion 140 may extend along a sealing part 150. That is, the protrusion 140 may be provided on an area to be sealed of a terrace 120.

The protrusion 140 may have a shape surrounding the cup part 110. In more detail, the protrusion 140 may include a first portion 141 extending to be parallel to a length of the cup part 110, and a second portion 142 extending to be parallel to a width of the cup part 110.

In a state in which the pouch type battery case 100 is spread, the protrusion 140 may form a single closed loop surrounding a pair of cup parts 110. When a single cup part 110 is provided in the die 10, the sub-punch 50 may form a single closed loop surrounding the single cup part 110. However, an embodiment of the present invention is not limited thereto, and the protrusion 140 may also be provided so that the protrusion 140 extends along the closed loop, and some sections are disconnected.

One portion of the protrusion 140 may be disposed outside one cup part 110, and the other portion may be disposed outside the other cup part 110. That is, the one portion of the protrusion 140 may be included in a first case 101, and the other portion may be included in a second case 102. The protrusion 140 included in the first case 101 and the protrusion 140 included in the second case 102 may have a symmetrical shape.

As illustrated in FIG. 11, when a bridge 130 is folded, the protrusion 140 of the first case 101 and the protrusion 140 of the second case 102 may face each other, and may be sealed to each other to provide a sealing part 150. This sealing part 150 may extend along a circumference of the cup part 110. When the first case 101 and the second case 102 are connected through the bridge 130 like this embodiment, the sealing part 150 may be provided along three sides of the battery case 100. In contrast, when the first case 101 and the second case 102 are separated from each other, the sealing part 150 may be provided along four sides of the battery case 100.

At least a portion of the sealing part 150 may be provided on the protrusion 140. In this embodiment, the sealing part 150 may be provided on the protrusion 140. A sealing tool (not shown) for sealing the battery case 100 may press the protrusion 140 to provide the sealing part 150.

In more detail, the sealing part 150 may include a first sealing part 151 provided along a second portion 142, and a second sealing part 152 provided along a first portion 141. The first sealing part 151 may be provided on the second portion 142, and the second sealing part 141 may be provided on the first portion 141.

As the protrusion 140 is sealed as above, the sealing reliability of the battery case 100 may be improved, and the concern that the electrolyte may leak may be minimized, when compared to the battery case according to the related art in which a wave is generated around the corner of the cup part.

In particular, when the protrusion 140 extends along the sealing part 150 like this embodiment, there is an advantage that the sealing reliability of the sealing part 150 as a whole may be more improved.

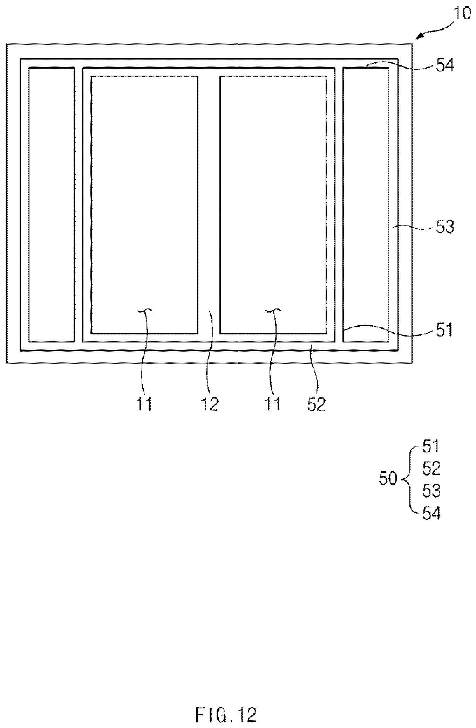

FIG. 12 is a plan view of a die included in a forming apparatus according to a third embodiment of the present invention.

A sub-punch 50 protruding from a die 10 of the forming apparatus according to this embodiment may further include a third punch part 53, which is disposed outward from a first punch part 51, and a fourth punch part 54 which connects the third punch part 53 to the first punch part 51.

The third punch part 53 may be spaced a predetermined gap from the first punch part 51. In a pouch type battery case 100, a portion corresponding to the gap may function as a gas pocket part.

The third punch part 53 may extend to be parallel to the first punch part 51. That is, the third punch part 53 may be parallel to a length of a molding recess 11.

The fourth punch part 54 may extend from a second punch part 52. That is, the fourth punch part 54 may be disposed collinearly with the second punch part 52.

The first punch part 51 and the second punch part 52 may form one closed loop surrounding the molding recess 11. The first punch part 51, the third punch part 53, and the fourth punch part 54 may form another closed loop.

Those of ordinary skill in the art could also easily understand that a sub-molding recess 40 corresponding to the sub-punch 50 is defined in a stripper 30 of the forming apparatus according to this embodiment.

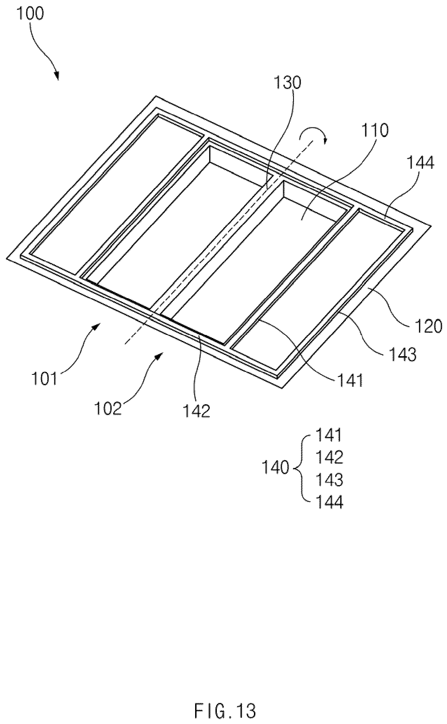

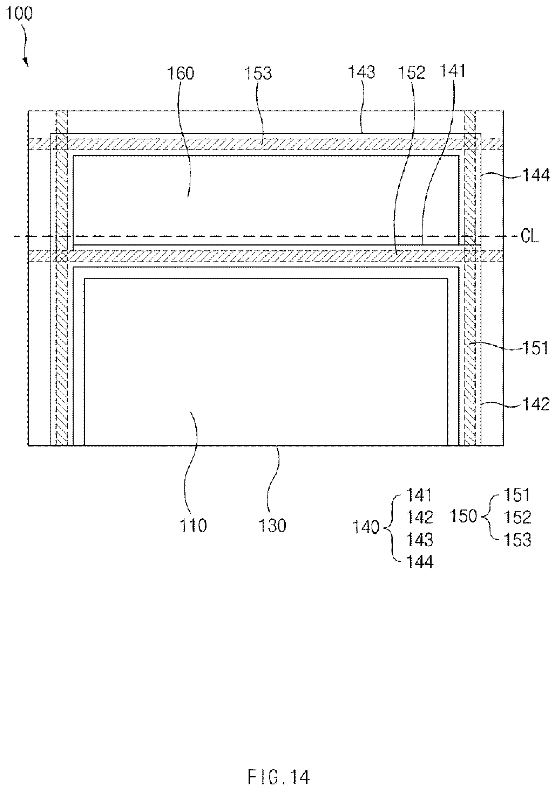

FIG. 13 is a schematic view of a pouch type battery case molded by the forming apparatus according to the third embodiment of the present invention. FIG. 14 is a plan view illustrating a state in which the pouch type battery case illustrated in FIG. 13 is sealed.

Hereinafter, a pouch type battery case 100 manufactured by the forming apparatus according to the third embodiment will be described as an embodiment of the present invention by applying the content in common with the content described above, and focusing on differences.

A protrusion 140 may be molded by the sub-punch 50 of the die 10. The protrusion 140 may have a shape corresponding to the sub-punch 50 of the die 10.

The protrusion 140 may be provided outward from a cup part 110. The protrusion 140 may extend along a sealing part 150. That is, the protrusion 140 may be provided on an area to be sealed of a terrace 120.

The protrusion 140 may have a shape surrounding the cup part 110. In more detail, the protrusion 140 may include a first portion 141 extending to be parallel to a length of the cup part 110, and a second portion 142 extending to be parallel to a width of the cup part 110. The protrusion 140 may further include a third portion 143, which is parallel to the first portion 141, and a fourth portion 144 which connects the first portion 141 to the third portion 143.

The first portion 141 and the third portion 143 may be spaced a predetermined gap from each other. The fourth portion 144 may extend from the second portion 142.

In a state in which the pouch type battery case 100 is spread, the first portion 141 and the second portion 142 may form one closed loop surrounding the cup part 110, and the first portion 141, the third portion 143, and the fourth portion 144 may form another closed loop.

As illustrated in FIG. 14, when a bridge 130 is folded, the protrusion 140 of a first case 101 and the protrusion 140 of a second case 102 may face each other, and may be sealed to each other to provide a sealing part 150.

In this embodiment, the sealing part 150 may be provided on the protrusion 140. A sealing tool (not shown) for sealing the battery case 100 may press the protrusion 140 to provide the sealing part 150.

In more detail, the sealing part 150 may include a first sealing part 151 provided along the second portion 142 and the fourth portion 144, a second sealing part 152 provided along the first portion 141, and a third sealing part 153 provided along the third portion 143. The first sealing part 151 may be provided on the second portion 142 and the fourth portion 144, the second sealing part 152 may be provided on the first portion 141, and the third sealing part 153 may be provided on the third portion 143.

Hereinafter, each of the sealing parts will be described in brief.

In a state in which the bridge 130 is folded, the first sealing part 151 may be first provided. In this case, the first case 101 and the second case 102 may have a bag shape having one end opened. An electrolyte may be injected into a cup part 110 through the opened one end.

Then, the opened one end may be sealed to provide the third sealing part 153. A portion between the cup part 110 and the third sealing part 153 may be defined as a gas pocket part 160. A gas, which is generated as an electrode assembly in the pouch type battery case 100 is activated, may be collected in the gas pocket part 160. In addition, a degassing process of punching the gas pocket part 160 to discharge the gas may be performed.

Thereafter, the second sealing part 152 may be provided. The second sealing part 152 may be provided to be adjacent to the cup part 110. The terrace 120 may be cut along a cutting line CL disposed outward from the second sealing part 152. That is, a portion disposed outside the cutting line CL may be removed. When all of these sealing parts 150 involved in the manufacture process are provided on the protrusion 140 as above, the sealing reliability of the sealing part 150 as a whole may be more improved.

The description of the present invention is intended to be illustrative, and various changes and modifications can be made by those with ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

| | | | |
|---|---|---|---|
| 10: | Die | 11: | Molding recess |
| 13: | Mounting groove | 20: | Punch |
| 30: | Stripper | 40: | Sub-molding recess |
| 50: | Sub-punch | 61: | Pressing part |
| 62: | Elastic member | 100: | Pouch type battery case |
| 110: | Cup part | 111: | Corner (of cup part) |
| 120: | Terrace | 130: | Bridge |
| 140: | Protrusion | 141: | First portion |
| 142: | Second portion | 143: | Third portion |
| 144: | Fourth portion | 150: | Sealing part |
| 160: | Gas pocket part | | |

## Claims

1. A pouch type battery case comprising a pair of cases, wherein at least one of the pair of cases comprises:
a cup part which is recessed;
a terrace which is disposed on a circumference of the cup part and on which a sealing part is provided; and
a protrusion protruding from the terrace in a direction opposite to a depth direction of the cup part,
wherein at least a portion of the sealing part is provided on the protrusion.

2. The pouch type battery case of claim 1, wherein each of the pair of cases comprises the cup part, the terrace, and the protrusion,
wherein the protrusion of one of the pair of cases and the protrusion of the other are in contact with each other to be sealed.

3. The pouch type battery case of claim 1, wherein the protrusion extends along the sealing part.

4. The pouch type battery case of claim 1, wherein at least a portion of the protrusion is disposed outside a corner of the cup part.

5. The pouch type battery case of claim \**1,** wherein a width of the protrusion is greater than a width of the sealing part.

6. The pouch type battery case of claim **5,** wherein edges at both sides in a width direction of the sealing part are disposed inward from edges at both sides in a width direction of the protrusion, respectively.

7. The pouch type battery case of claim 1, wherein the protrusion comprises:
a first portion disposed outside the cup part in a width direction of the cup part; and
a second portion connected to the first portion and disposed outside the cup part in a length direction of the cup part.

8. The pouch type battery case of claim 7, wherein the first portion extends to be parallel to a length of the cup part, and
the second portion extends to be parallel to a width of the cup part.

9. A forming apparatus comprising:
a die in which a molding recess is defined;
a punch disposed to face the molding recess;
a stripper disposed on a circumference of the punch to face the die;
a sub-molding recess defined in the stripper;
a sub-punch protruding from the die to face the sub-molding recess;
a pressing part disposed in the sub-molding recess; and
an elastic member configured to apply elastic force directed to the sub-punch to the pressing part.

10. The forming apparatus of claim 9, wherein the sub-punch is disposed outside the molding recess.

11. The forming apparatus of claim 10, wherein at least a portion of the sub-punch is disposed outside a corner of the molding recess.

12. The forming apparatus of claim 9, wherein the sub-punch comprises:
a first punch part disposed outside the molding recess in a width direction of the molding recess; and
a second punch part connected to the first punch part and disposed outside the molding recess in a length direction of the molding recess.

13. The forming apparatus of claim 12, wherein the first punch part extends to be parallel to a length of the molding recess, and
the second punch part extends to be parallel to a width of the cup part.

14. The forming apparatus of claim 12, wherein the sub-punch further comprises:
a third punch part disposed outward from the first punch part and spaced a predetermined gap from the first punch part; and
a fourth punch part connecting the third punch part to the first punch part.

15. The forming apparatus of claim 14, wherein the third punch part extends to be parallel to the first punch part, and
the fourth punch part extends to be parallel to the second punch part.

16. The forming apparatus of claim 9, wherein a mounting groove in which the sub-punch is mounted is defined in the die.
